# DEMANDE DE BREVET EUROPEEN

(11) **EP 1 401 167 A1**
(43) Date de publication de la demande: **24.03.2004**
(21) Numéro de dépôt: 02292274.4
(22) Date de dépôt: 17.09.2002
(51) Int. Cl.: H04L 29/06, G06F 1/00

(54) **Architecture pour établir une session multimédia sur un réseau**

(71) Demandeur: CP8, 78431 Louveciennes Cedex (FR)
(72) Inventeur: Urien, Pascal, 78450 Villepreux (FR); Tizraoui, Adel, 92500 Rueil Malmaison (FR)
(74) Mandataire: Corlu, Bernard

(57) **Abrégé**

L'invention concerne une architecture pour établir une session multimédia sur un réseau, comprenant un terminal coopérant avec un système embarqué.

Selon l'invention, le terminal comprend en outre :
- des moyens d'enregistrement et de localisation d'un usager appelé sur le réseau ;
- des moyens d'authentification d'un usager appelant à partir de ce terminal et possédant ce système embarqué ;
et le système embarqué stocke :
- une information d'identité de l'usager appelant ;
- une adresse de l'usager appelé ou de son terminal, définissant la localisation de l'un de ceux-ci sur le réseau ; et
- au moins une clé cryptographique,
lesdits moyens d'enregistrement et de localisation étant agencés pour enregistrer et localiser l'usager appelé à partir de son adresse ou de celle de son terminal, fournie par le système embarqué ; et
lesdits moyens d'authentification étant agencés pour authentifier l'usager appelant à partir de ladite clé fournie par le système embarqué.

## Description

### I- Introduction générale :

On assiste aujourd'hui à la convergence de plusieurs facteurs technologiques et économiques qui tendent à introduire la notion d'objet communiquant, intégrant un système informatique et muni de ressources de communication (filaires ou sans fils) permettant l'échange de données avec le réseau internet.
L'omniprésence des ordinateurs (*ubiguitous computing),* l'accès universel à la toile d'araignée mondiale (*ubiguitous internet),* et l'intégration de ces fonctions dans des surfaces de silicium de plus en plus réduites (parfois appelées SOC-System On Chip) sont autant de facteurs favorisant l'apparition massive d'objets divers ou de terminaux multimédias reliés à internet. Ce qui permet l'accès à des services depuis un réseau d'accès, ou les interactions entre objets communicants impliquent la mise en place d'une architecture sécurisée de bout en bout. Ces impératifs de sécurité sont proches de la problématique des AAA (*Authentication, Authorization, Accounting*) étudiée par l'IETF.

L'authentification de l'utilisateur est un problème clé tant pour la connexion à un réseau d'accès, que pour l'obtention du service auquel il a souscrit. Cette opération nécessite la connaissance de divers paramètres dont certains sont publics (adresse de serveur, identifiant d'abonné..), et d'autres confidentiels (clés d'authentification...). L'ensemble de ces paramètres, dont les propriétaires peuvent être multiples (réseau, service, client...), sont les composants d'un profil, nécessaire à la réalisation du service.
Au terme de la procédure d'authentification le réseau ou le service affecte à l'utilisateur des droits, généralement déduits de la consultation d'une base de données ; il devient alors possible de facturer l'internaute pour les ressources qu'il consomme. Jusqu'à présent la plupart des utilisateurs d'un réseau télématique sont authentifiés par des mots de passes. L'introduction de mécanismes à clés publiques (tels que SSL) permet d'authentifier le côté serveur dont l'environnement informatique est considéré sûr et loge des clés RSA privées.

Côté client, le système hôte ne mémorise aucune clé, ou encore stocke une valeur de clé chiffrée à l'aide d'un mot de passe *(passphrase),* en raison du manque de sûreté de fonctionnement de ces systèmes (ordinateurs personnels ...). Une approche permettant l'amélioration de la sécurité côté client, consiste à conduire le processus d'authentification à l'aide de classiques cartes a puce.

Depuis plusieurs années nous avons introduit le concept de carte à puce Internet. Dans ce brevet nous montrons les Contraintes de sécurité dans les architectures et les protocoles de la voix sur lP (Voice over Internet Protocol), nous présentons ensuite la technologie « carte à puce Internet » pour décrire après le module de sécurité (modules « VoIP-SmartCard ») adaptés aux besoins de sécurité émergeant dans La VolP, nous décrivons a la fin notre logiciel de téléphonie sur IP mettant en oeuvre de tels composants.

### 1- Contrainte de sécurité dans la VolP :

L'architecture VolP vise à établir une session multimédia entre deux clients à l'aide de bornes reliées au réseau Internet, chaque borne est associée à une adresse IP et supportent du texte, de la voix, et de l'image. Avant de lancer un appel, il est nécessaire d'abord de localiser un utilisateur sur d'Internet (par exemple déterminer son adresse IP) et de déterminer en second lieu les ressources multimédia de son terminal. Aujourd'hui deux architectures sont disponibles pour déployer des services de VolP, H.323 et SIP.

H.323 était initialement défini pour le transport des flux multimédia dans le réseau RNIS. C'est un parapluie pour les protocoles binaires. SIP est plus récent, c'est un protocole orienté ASCII a l'image du protocole HTTP. Les deux architectures intègrent des dispositifs de sécurité pour l'enregistrement et la localisation de l'utilisateur, l'authentification simple ou mutuelle entre les deux parties (appelant et appelée ), la confidentialité et l'intégrité du flux multimédia échangé.

Nous allons maintenant étudier des procédures principales de sécurité définies dans des architectures VoIP et dans lesquelles la carte a puce apporte une grande contribution:
- L'enregistrement et la localisation authentifié d'un utilisateur.
- L'authentification des deux parties (appelant et appelée).
- La confidentialité et l'intégrité du flux multimédia échangé.
- La facturation et le payement de la qualité du service du réseau
- La personnalisation du logiciel client.

### Enregistrement et localisation authentifié d'un utilisateur :

L'enregistrement et la localisation d'un utilisateur consistent en établissant une correspondance entre l'identifiant d'un utilisateur et l'adresse IP de son terminal. Dans l'architecture de SIP cette identifiant (username@server.com) est constitué de deux partie, le nom d'utilisateur (partie gauche) et le nom du serveur d'enregistrement (partie droite). Dans H323 il n'y a pas d'identifiant précis affectée à une partie appelante donnée, mais un ensemble de paramètres insérés dans le paquet d'initialisation peut être employé pour ce but comme les éléments d'information afficheés (habituellement un nom de personne), ou l'adresse source H323 qui inclut une adresse E.164 (numéro de téléphone, adresse IP) et un ensemble de H323-IDs (username, email..). Dans SIP une commande dédiée « REGISTER » réalise le procédé d'enregistrement, et est généralement associé à une procédure d'authentification, qui calcule la fonction de hachage (MD5) déduite d'une valeur aléatoire et d'un mot de passe utilisateur. H323 n'a pas spécifié de serveur d'enregistrement, mais les implémentations populaires (net-meeting..) utilisent les annuaires LDAP [ 15 ] pour fournir ce service. une session de base avec un serveur LDAP peut être sécurisé par un mot de passe, envoyé en clair (non chiffré). Donc la localisation d'utilisateur est accomplie en envoyant une demande à un serveur de localisation (un serveur SIP ou un serveur LDAP) afin d'obtenir l'adresse IP de la partie a appelé, habituellement aucun procédé d'authentification n'est exécuté avant cette opération.

Dans cette section nous avons identifié trois paramètres de base, qui sont un préalable à l'ouvrir d'une session de multimédia a travers Internet
- l'identifiant d'un utilisateur (UID)
- l'adresse du serveur d'enregistrement/localisation (SRL)
- Une procédure d'authentification associé au serveur d'enregistrement et de localisation (KRL).

### L'authentification des deux parties (appelant et appelée) :

Le processus d'authentification mutuelle contrôle respectivement les identifications des parties appelées et appelantes imposant de ce fait l'identification des deux parties. De cette procédure il est possible de déduire une clé de session, qui sera employée pour assurer la confidentialité et l'intégrité du flux multimédia. L'authentification simple (l'authentification de la partie appelante) est exigée par la partie appelée pour identifier la partie appelante avant d'accepter une communication. L'authentification mutuelle est initialisée par la partie appelante, pour vérifier l'identité de la partie appelée.

Les spécifications SIP ont défini plusieurs mécanismes simples d'authentification, par exemple l'authentification par digest (mot de passe symétrique partagé) ou un schéma d'auto authentification de type PGP. Le schéma d'authentification peut être réalisé par le chiffrement de messages SIP, qui se fait a base de clés partagées par les deux parties concernées dans la requête. Typiquement un message est envoyé chiffrer avec la clef publique du destinataire; il est suggère de supporter un chiffrement basé sur PGP mais d'autres schémas sont possibles.

Une recommandation de sécurité H.235 a été écrite pour l'architecture H323. Une session multimédia est établie en deux étapes. Au début, les premiers messages H225 sont envoyés pour la signalisation d'appel (sonnerie, identification de partie appelante..), en second lieu et après l'acception de l'appel, le protocole H245 est employé afin de négocier un canal logique bidirectionnel permettant l'échange du flux multimédia. L'authentification peut être effectuée pendant le processus de signalisation (H225), par un mot de passe partagé (authentification simple) ou par un échange authentifié de clés Diffie-Hellman. En plus un port TCP (1300) dédier peut être utiliser pour sécuriser les messages H225. Une clef de la session H245 est déduite du procédé d'authentification, qui est utilisé pour fournir l'intégrité et l'authentification des messages H245. De ces considérations, nous déduisons qu'une clef KCALL d'authentification publique ou partagée, est employée entre la partie appelée et appelante afin d'effectuer l'authentification d'appel (simple ou mutuel).

### La confidentialité et l'intégrité du flux multimédia échangé :

La confidentialité et l'intégrité du flux multimédia échangé est assurée par une clef de session (KRTP), qui est déduite de la clef d'authentification (KCALL). Les données (text, voix ou image) sont transportées par des paquets RTP; des opérations de sécurité (chiffrement, intégrité de données) sont réalisées selon recommandations RTP ou H.235. Dans ce dernier il est recommandé de mettre à jour périodiquement KRTP, par exemple une nouvelle clé est produite chaque 2³⁰ blocs chiffrés.

### La facturation et le payement de la qualité du service du réseau

La QoS ( qualité du service du réseau) est un paramètre important pour transport efficaces des flux multimédia a travers Internet. Plusieurs protocoles sont sous définition, comme COPS ou RSVP, qui sont employés entre l'utilisateur, les routeurs de bord (edge router) et les serveurs de politique afin de négocier un ensemble de paramètres (le débit moyen... ). Les requête et les réponses sont transportées par des messages COPS ou RSVP et authentifiés par un INTÉGRITY OBJECT, qui calcule un digest déduit du contenu de message et d'une clé secrète symétrique et partagée (KQoS). En bref, deux clefs sont exigées pour la gestion de QoS, KQoS et KSP. Aujourd'hui, aucun schéma de distribution n'a été défini pour attribuer ces clés, mais il est probable que ce paramètre pourrait résulter d'un procédé d'authentification (impliquant un Fournisseur de Service Internet) fonctionnant avec une infrastructure a clés publiques ; dans ce contexte un utilisateur est identifié par une clé KSP. Un autre scénario possible est l'emploie des clés prépayées stockées dans les cartes a puce dédiées.

### La personnalisation du logiciel client :

Les terminaux utilisés pour VolP sont en fait des ordinateurs standard (PCs, PDAs) reliés au réseau Internet et équipés de cartes son et d'enregistreurs audio/vidéo, ces terminaux exécutent un logiciel dédiés (H323 ou SIP). La carte puce « VoIP-SmartCard » peut stocker tous les paramètres nécessaire a la personnalisation de ce logiciel comme:
- L'identité de l'utilisateur (*Network Address Identifier*, e.g. l'identifiant SIP, l'identifiant H323...).
- Les droits de l'utilisateur (procédures d'authentification...).
- Les information personnelles de l'utilisateur (phonebook..).

### 2- La carte puce Internet :

L'approche puce Internet consiste à loger dans la puce des applications Internet clients ou serveurs. Dans l'état actuel de l'art il n'est pas possible d'intégrer une ressource de communication dans la surface réduite du SPOM (remarquons toutefois que ce verrou pourrait disparaître avec l'intégration de la technologie sans fil e.g. *bluetooth).* En conséquence il est nécessaire d'utiliser les facilités de communication offertes par le terminal. Une autre contrainte résulte des protocoles d'échange de données de type half duplex entre terminal et carte. Cependant, bien que TCP présente des aspects full duplex induit par les paquets d'acquittement, les applications traditionnelles de l'Internet (HTTP, LDAP, ...) suivent un paradigme de type question/réponse compatible avec les restrictions citées précédemment. La particularité du modèle de communication des cartes à puce est donc la répartition des couches protocolaires entre terminal et carte. Schématiquement trois alternatives se présentent
□ Utiliser une adresse IPv4 fixe, ce qui impose une mobilité restreinte à un réseau (ou sous réseau) IP particulier, et pose le problème de la disponibilité massive de ces adresses (1 milliard de puces sont produites par an).
□Partager l'adresse IP du terminal et affecter à la puce un ou plusieurs ports TCP. □ Affecter une adresse IPv6 à chaque application embarquée. Cet dernier choix est attractif en raison du nombre important d'adresses disponibles (2 ₁₂₈), cependant il est lié au déploiement massif des réseaux IPv6.
L'architecture que nous présentons permet le partage de la pile TCP/IP du terminal auquel la carte est connectée. Des entités logicielles autonomes (dénommées agents) sont implémentées dans le système hôte et la puce sécurisée, et dialoguent à l'aide du protocole SmartTP, transporté par des APDUs. Côté terminal des agents réseaux accèdent à la pile de communication et réalisent une conversion de protocole entre SmartTP et TCP. Côté carte des agents réalisent des protocoles serveurs ou client; ces entités logicielles communiquent avec le réseau au moyen de sessions avec les agents réseaux échangeant des unités protocolaires SmartTP. Un paquet SmartTP est constitué d'un en tête de cinq octets et d'un champ optionnel de données de 240 octets au plus. Un en tête SmartTP comporte des références (2 octets) source et destination (équivalentes aux ports TCP) et un champ *FLAG* permettant la gestion des événements d'une session (ouverture, fermeture, échange de données bloquant, acquittement, ...). Trois agents principaux assurent la gestion de la carte internet.
□ L'agent P0 (associé au port TCP P0=8082) transforme une requête HTTP en une suite d'APDUs, destinée par exemple à instancier une application embarquée. Ainsi l'URL http://127.0.0.1:8082/?write=00A40400054A54455354 sélectionne l'applet JTEST (Application Identifier = 5A 54 45 53 54 = JTEST), en cas de succès on obtient un fichier image de 1 pixel, dans le cas contraire un statut d'erreur HTTP est délivré (c'est une technique que nous nommons *CardBug).*
□ L'agent P1 (associé au port TCP P1=8080) ouvre une session avec le serveur WEB embarqué dans la puce. Ainsi l'URLhttp://127.0.0.1:8080/Key1?x=69DA379EF99580A8 réalise un chiffrement DES du mot 69DA379EF99580A8 à l'aide d'une clé Key1.
□ L'agent *client TCP* permet aux agents cartes client d'ouvrir des sessions TCP et d'échanger des informations avec des serveurs Internet distants.

### 3- Intégration des puces Internet dans la technologie VolP:

Nous classifierons succinctement l'usage des puces Internet dans la technologies VolP en trois catégories en fonction de la complexité des opérations conduites par la puce sécurisée,
*Le mode mémoire. La mémoire non volatile stocke des données identifiées par des URLs. Le terminal supposé sûre, lit ces informations (par exemple des identifiant ou des clés de chiffrement) mais réalise tous les calculs cryptographiques. La puce se comporte comme un serveur portable qui embarque les données critiques d'un internaute (adresse de serveur, login, mot de passe ...).
**Le mode appel de procédure.* Les fonctions cryptographiques, sont exécutées par le processeur du SPOM et sont identifiées par des URLs de manière analogue aux processus démarrés depuis un serveur WEB à l'aide d'une interface de type Common Gateway Interface (CGI).
**Le mode proxy de confiance*. Un protocole client incorporant des composants sécurisés (H323, SIP, LDAP...) est entièrement ou partiellement réalisé par la puce sécurisée. Typiquement une application embarquée est activée à l'aide d'une requête HTTP, elle se connecte à un terminal distant, conduit une authentification simple ou mutuelle et en cas de succès calcule une ou plusieurs clés de session qui seront utilisées par le terminal pour assurer des services de confidentialité ou d'intégrité de données.

| **Mode opératoire** | **Données.** | **Procédures.** | **Protocoles.** |
|---|---|---|---|
| Mémoire | Puce | Terminal | Terminal |
| Appel de procédure | Puce | Puce | Terminal |
| Proxy de confiance | Puce | Puce | Puce |

Les informations, procédures et protocoles stockés dans la puce Internet sont identifiés par des URLs et accessibles à l'aide d'un schéma d'organisation de données qui peut être un parseur XML ou une base de donnée. Ce bloc fonctionnel utilise les services d'une interface sécurisée d'accès aux méthodes et données embarquées. Par exemple lors d'une tentative d'accès à un objet protégé cette entité produit un formulaire HTML qui comporte un champ password et un pointeur sur un processus d'authentification.

Les principaux bénéfices de l'introduction de technologie XML dans les cartes Internet sont la description des ressources embarquées à l'aide de DTD bien connues, et la compatibilité avec les procédures d'appels d'objets basées sur des dialectes dérivés de XML, telles que SOAP. Nous remarquerons également qu'un document XML est composé de divers entités transportées par le protocole HTTP, qui peuvent être stockées dans la carte puce Internet

### 4- Le nouveau model de sécurité pour VolP à base du module « VoIP-SmartCard » :

De manière analogue aux terminaux de téléphonie mobile qui sont personnalisés, authentifiés et facturés à l'aide de cartes SIM, nous avons défini un module de sécurité « VoIP-SmartCard » pour la personnalisation du logiciel multimédia (VolP ... ), l'authentification de l'utilisateur, le chiffrement du flux multimédia et la facturation de la qualité de service requise en particulier pour le transport de flux multimédia à travers le réseau internet. L'architecture logicielle de notre module « VoIP-SmartCard » comporte
1. Une ou plusieurs piles de communication,
2. Un daemon HTTP,
3. Un schéma d'organisation de donnée (parseur XML),
4. Une interface de sécurité supervisant les accès aux données,
5. Des procédures (cryptographiques),
6. Des protocoles embarqués.
7. Un profil utilisateur contient un jeu de paramètres nécessaire à la réalisation d'un service, en voici une liste non exhaustive :
   - Des clés (et des procédures) authentifiant le bénéficiaire d'un service particulier, ou assurant la confidentialité ou l'intégrité des informations échangées. Ainsi les messages des protocoles RSVP (rfc 2205) ou COPS (rfc 2748) sont identifiés par un *integrity object*, qui délivre la signature des données *(keyed message digest*) à l'aide d'une fonction d'empreinte MD5 et d'une clé d'identification *(key identifier).* Certaines clés sont détenues par le prestataire du service, et d'autres par le porteur de la carte « VolP-SmartCard ».
   - Des données nécessaires au service délivré, par exemple des identifiants d'utilisateur (Network Access Identifier, adresses SIP, h323_ID...), des adresses de serveurs divers (authentification, annuaires, politiques de QoS...), des clés de session, des informations personnelles (carnets d'adresses ...).
   - Des protocoles réalisant des opérations sécurisées telles que le classique SSL, des enregistrements à des serveurs de localisation (LDAP, SIP...), des appels SIP authentifiés (INVITE...).

Nous avons développé un premier prototype qui comprend un logiciel de téléphonie H323 sous win32 (une adaptation du code public *openH323*) muni d'une interface carte à puce (PC/SC), et une carte « VolP-Smartcard » mettant en oeuvre un paradigme de type mémoire. Les paramètres de personnalisation du logiciel sont,
- un identifiant (h323_ID) figurant dans le message setup du paquet d'appel Q.931 du protocole H323.
- un carnet d'adresse qui comporte une liste de h323_ID visualisée par le logiciel à l'aided'une liste déroulante . Le premier élément de la liste fournit l'identifiant du porteur de la carte.

Le logiciel détecte l'insertion d'une carte « VoIP-SmartCard », sélectionne une application carte embarquée JTEST, et lit le carnet d'adresse. Chaque élément du carnet d'adresse est associé à une clé DES d'authentification (KEYx), et à une adresse IP (ADRx). Un carnet d'adresse comporte pour chaque correspondant le nom de l'annuaire LDAP ou l'on peut obtenir son adresse IP (lLSx). Afin de prévenir les appels indésirables le logiciel authentifie un appel sortant en ajoutant au h323_ID local un préfixe de 8 octets chiffré par la clé KEYX du correspondant (identifié par son adresse IP ADRx ou son annuaire ILSX), qui inclut les champs suivants,
- un nombre aléatoire de 2 octets (r2) étendu de manière symétrique à 4 octets (r4=2 16 .r2 + r2).
- l'heure GMT exprimée en format UNIX (4 octets, représentant le nombre de secondes écoulées depuis le 1° janvier 1970).

Le logiciel destinataire de l'appel extrait le h323_ID du message setup de l'appelant, en déduit sa clé KEYx, et déchiffre le préfixe. Il vérifie que le nombre r4 comporte deux parties symétriques et que l'heure d'émission de l'appel est cohérente (par exemple le délai de transit est inférieur à une minute...).

Un exemple de contenu de module « VoIP-SmartCard » :

| Ressource embarquée | URL « VoIP-SmartCard » **>>** |
|---|---|
| Application JTEST | http ://127.0.0.1 :8082/ |
| ?write=00A40400054A54455354 | |
| Carnet d'adresses | http ://127.0.0.1 :8080/name |
| Clé DES pour l'index x | http ://127.0.0.1 :8080/KEYx |
| Adresse IP pour l'index x | http://127.0.0.1 :8080/ADRX |
| Nom de l'annuaire pour l'index x | http ://127.0.0.1 :8080/ILSX |

Le module de sécurité intègre la fonction de génération du h323_ID du destinataire, ainsi qu'une procédure de vérification du h323_ID entrant, et calculera des clés de session destinées au chiffrement et au contrôle d'intégrité du flux multimedia transporté par le protocole RTP. La gestion de la qualité de service est également prise en compte à l'aide d'un protocole tel que RSVP ou COPS logé dans la carte « VolP-SmartCard », réalisant le calcul des *integrity object* à l'aide de clés prépayées.

### II)- Description du produit « client software H323 » :

### 1- Architecture du software de téléphonie sur IP :

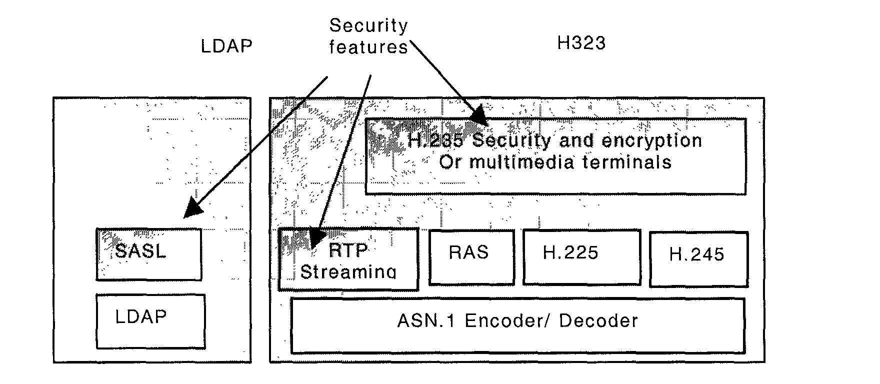

Pour établir une conversation téléphonique sur Internet l'appelant et l'appelé doivent utiliser le même type de logiciel. La figure représente l'architecture de notre logiciel de téléphonie sur Internet qui comporte les sous ensemble suivants :
- Le protocole d'enregistrement et de localisation LDAP qui réalise l'enregistrement d'un abonné sur un serveur d'annuaire (identifié par un port TCP particulier, par exemple 389). Et permet aussi la recherche d'un abonné a partir de son identifiant ( généralement son Email )
- Un canal de signalisation qui met en oeuvre le protocole de signalisation H225 qui gère un appel téléphonique a travers une connexion TCP sur un port particulier (1503 par exemple ) .
- Un canal de control qui met en oeuvre le protocole H245 permettant la négociation et l'établissement de la session.
- Un canal de données qui gère l'échange des données temps réel à l'aide du protocole RTP.

### 2- Architecture des bibliothèques de classes du client OpenH323 :

Ce diagramme donne une vue d'ensemble sur les classes principales actuelles dans le software OpenH323 et comment ces dernières agissent l'une avec l'autre dans notre application classique de téléphone sur IP :

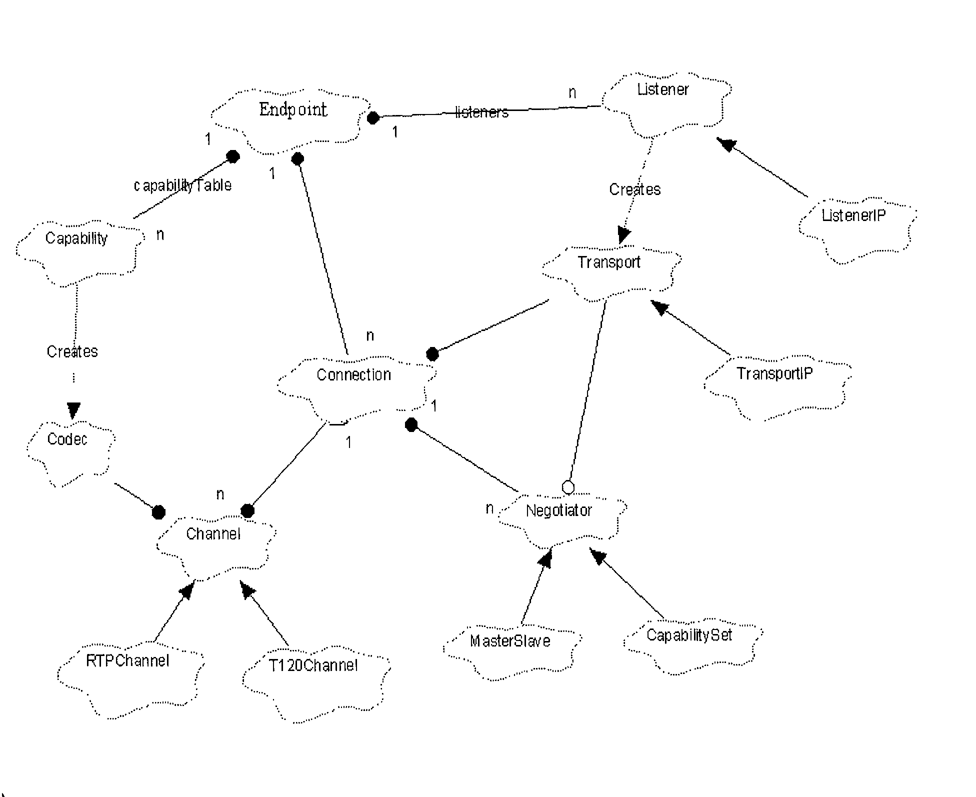

### 3- architecture du module « « VoIP-SmartCard » » associé :

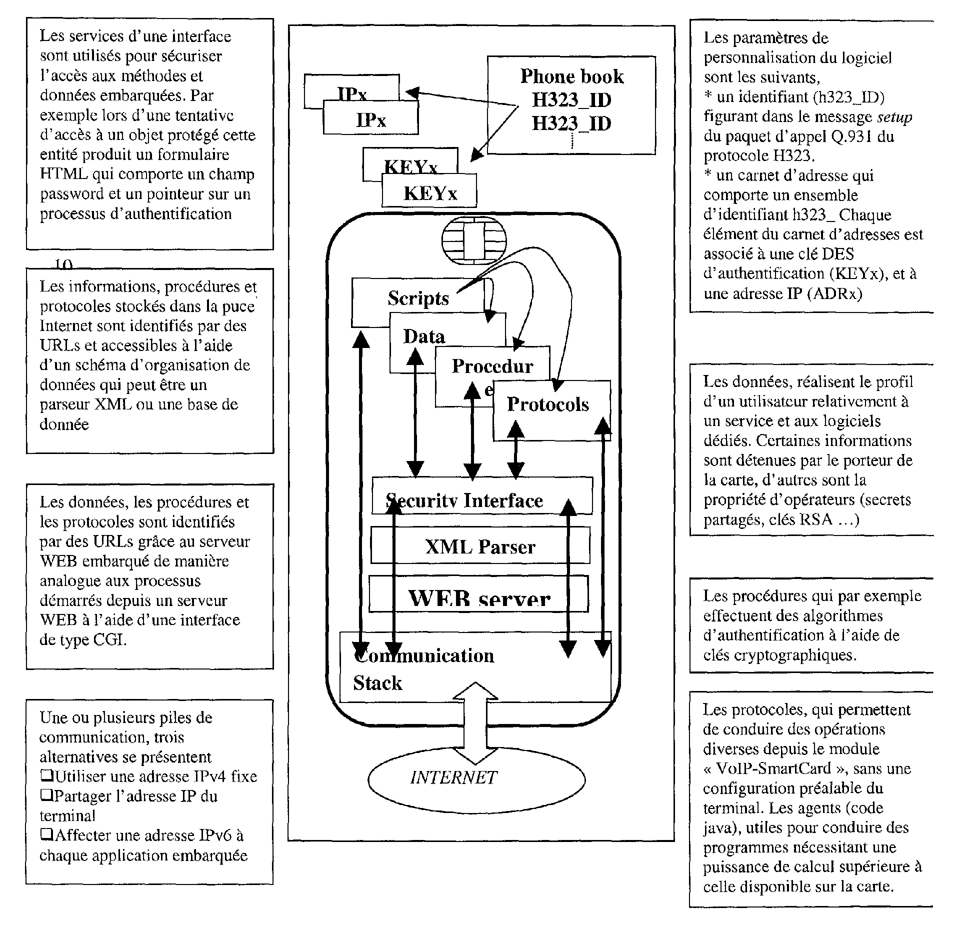

### 3.1- état du software au lancement :

### aspects visuels

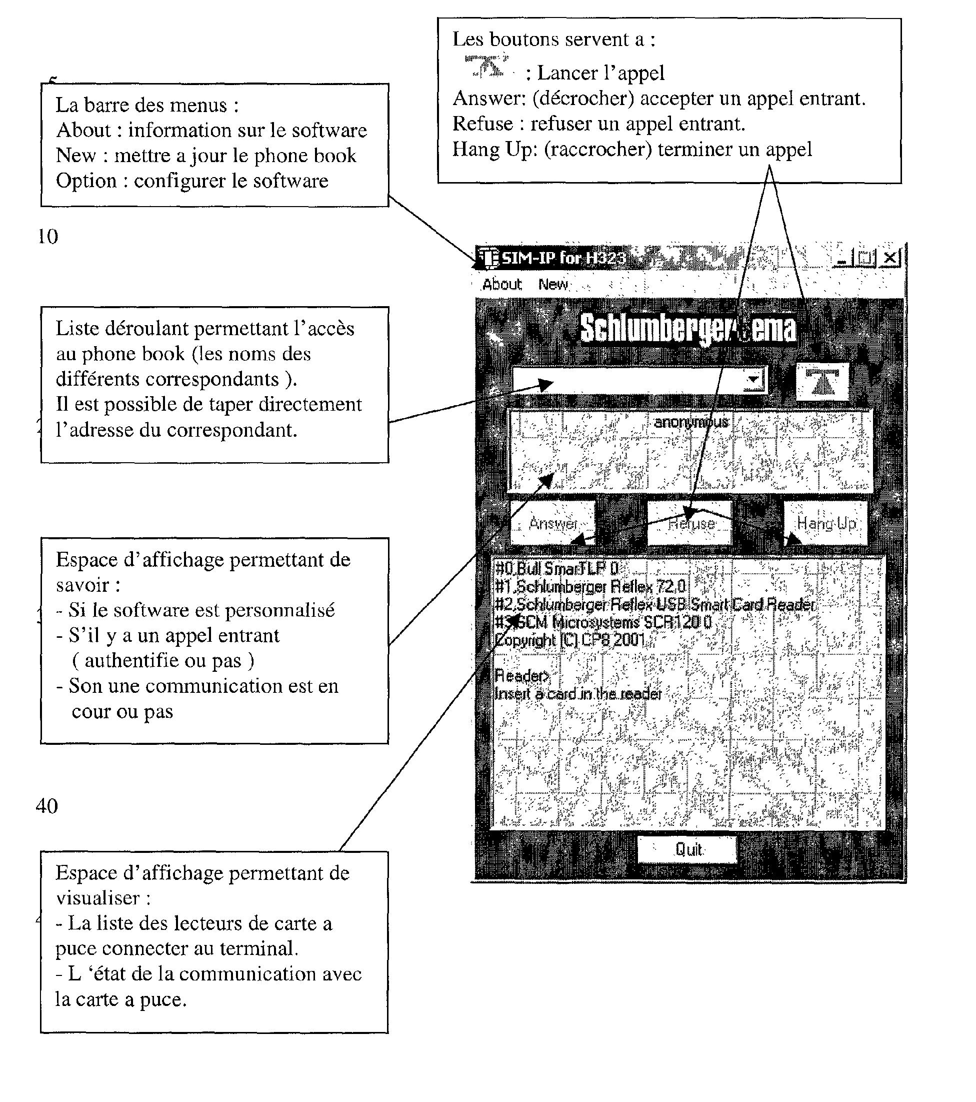

### utilisation « sans la carte »

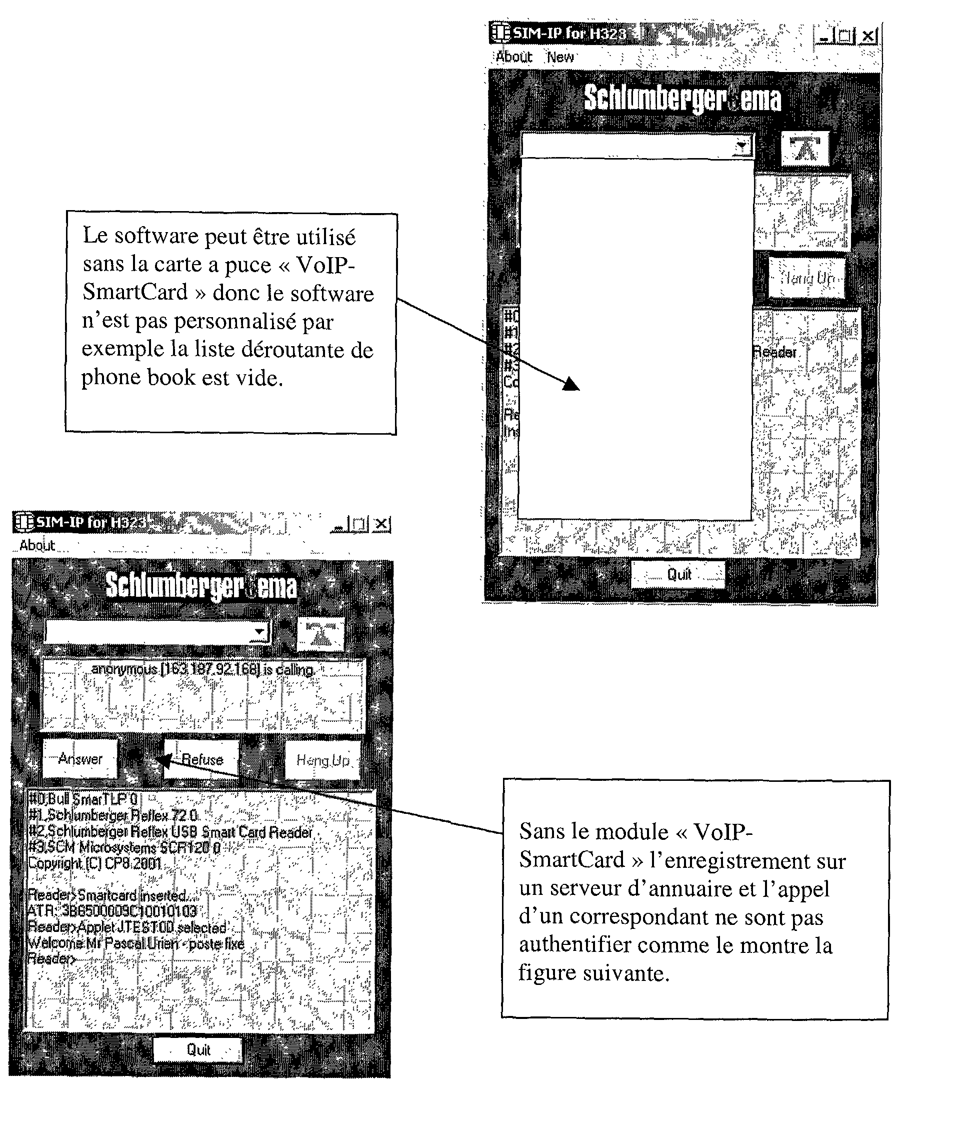

### 3.2- insertion de la carte :

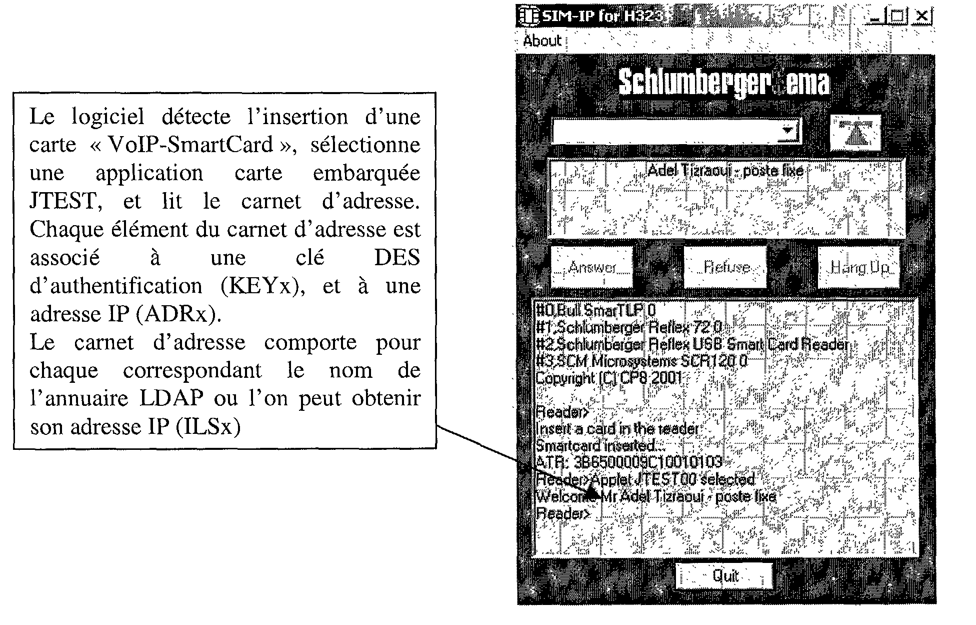

### personnalisation du software

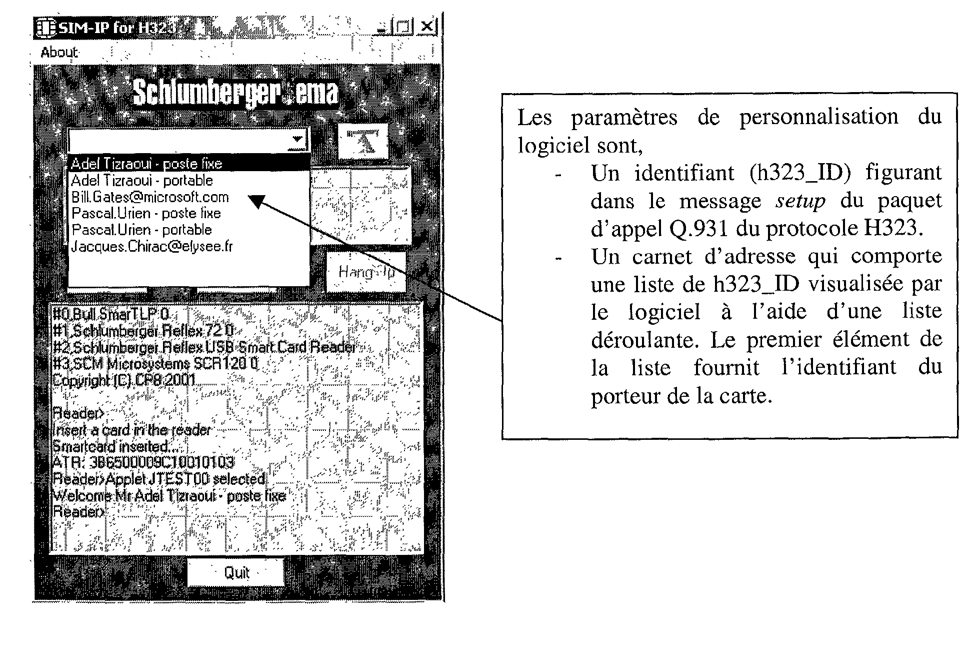

### comment est exploité le module « « VoIP-SmartCard » »

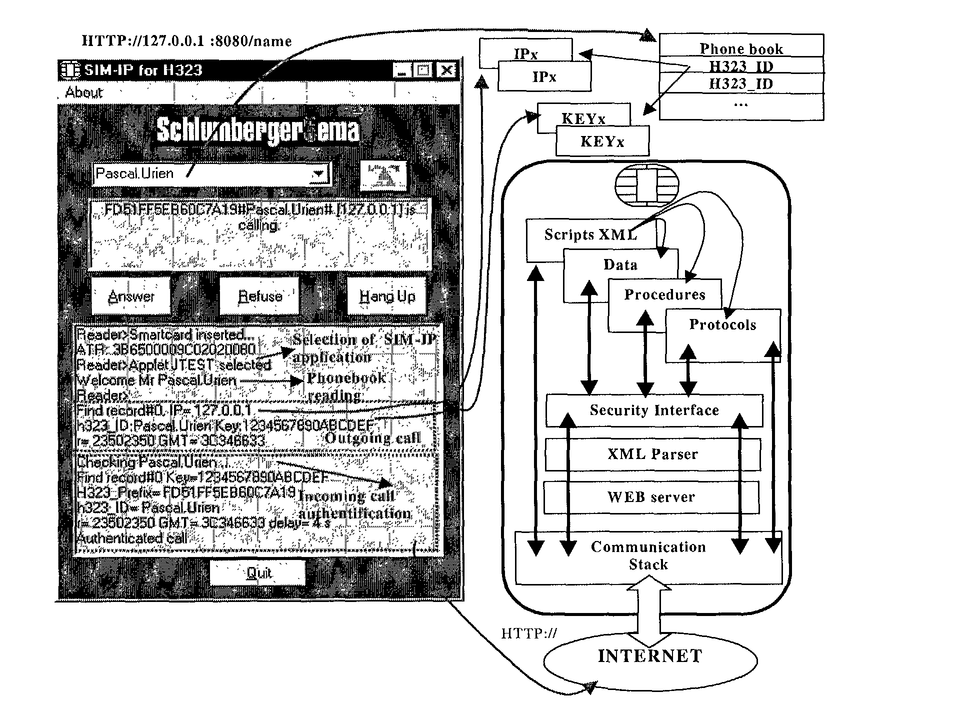

Le logiciel détecte l'insertion d'une carte « VoIP-SmartCard », sélectionne une application carte embarquée JTEST, et lit le carnet d'adresse. Chaque élément du carnet d'adresse est associé à une clé DES d'authentification (KEYx), et à une adresse IP (ADRx).
Le carnet d'adresse comporte pour chaque correspondant le nom de l'annuaire LDAP ou l'on peut obtenir son adresse IP (ILSX). Afin de prévenir les appels indésirables le logiciel authentifie un appel sortant en ajoutant au h323_ID local un préfixe de 8 octets chiffré par la clé KEYx du correspondant (identifié par son adresse IP ADRx ou son annuaire ILSX), qui inclut les champs suivants :
- un nombre aléatoire de 2 octets (r2) étendu de manière symétrique à 4 octets (r4=2 16 .r2 + r2).
- l'heure GMT exprimée en format UNIX (4 octets, représentant le nombre de secondes écoulées depuis le 1° janvier 1970).

Le logiciel destinataire de l'appel extrait le h323_ID du message *setup* de l'appelant, en déduit sa clé KEYx, et déchiffre le préfixe. Il vérifie que le nombre r4 comporte deux parties symétriques et que l'heure d'émission de l'appel est cohérente (par exemple le délai de transit est inférieur à une minute...).

### Le déroulement d'une communication (signalisation authentifie )

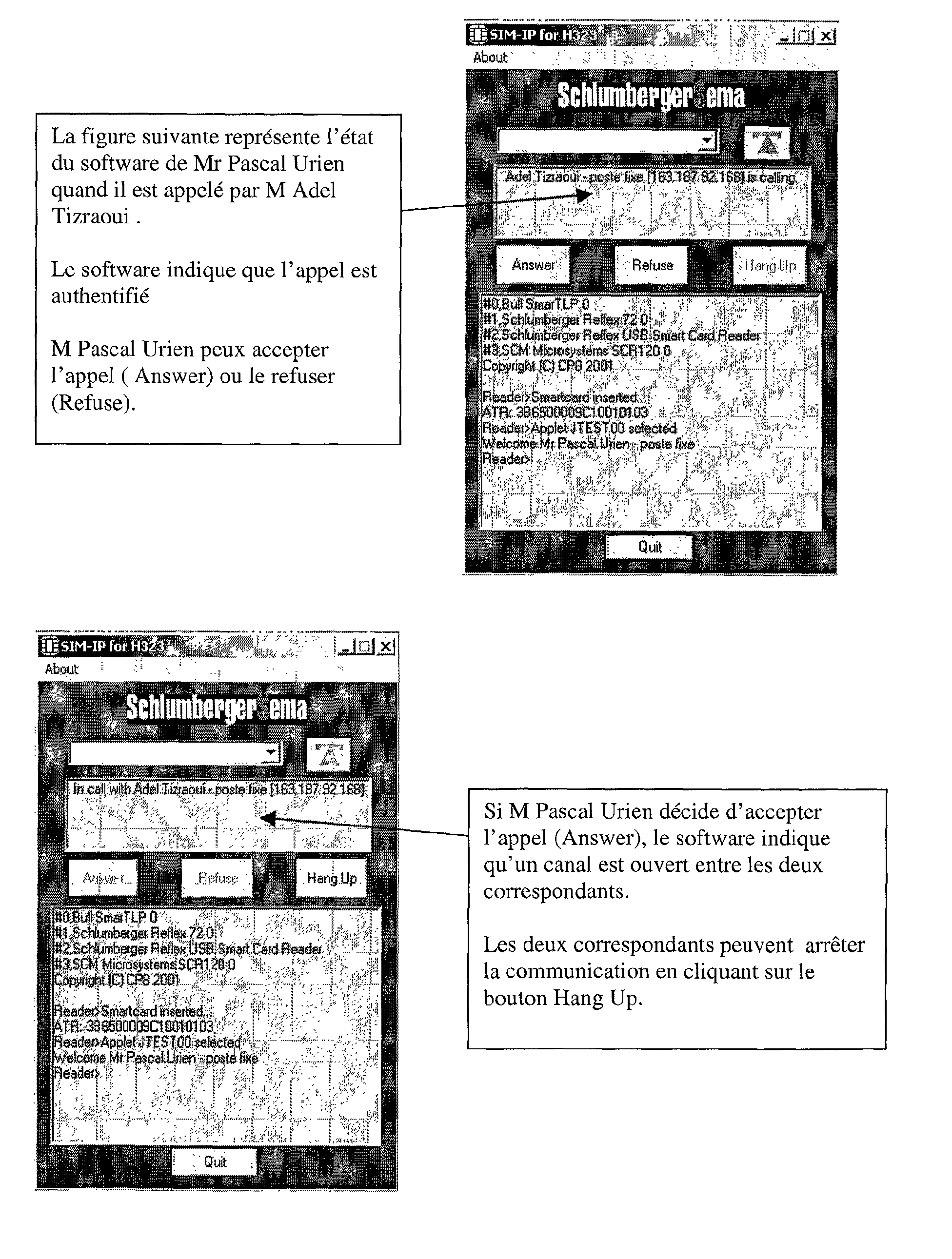

### 3.3- Utilisation des autres fonctionnalités

### Enregistrement authentifié sur un annuaire LDAP

### Recherche et localisation d'un correspondant sur un annuaire LDAP

### Le chiffrement et le déchiffrement ainsi que l'intégrité des données :

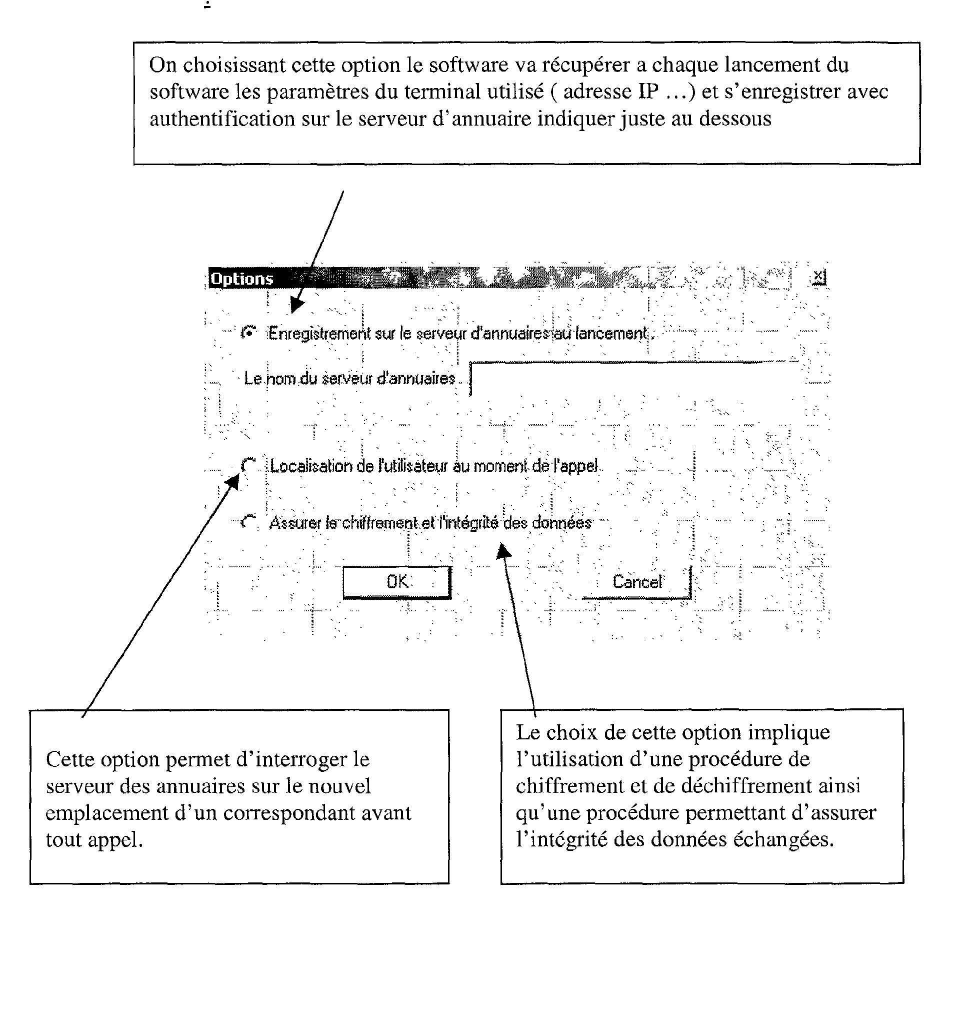

### Mettre à jour le phone book (ajout et suppression)

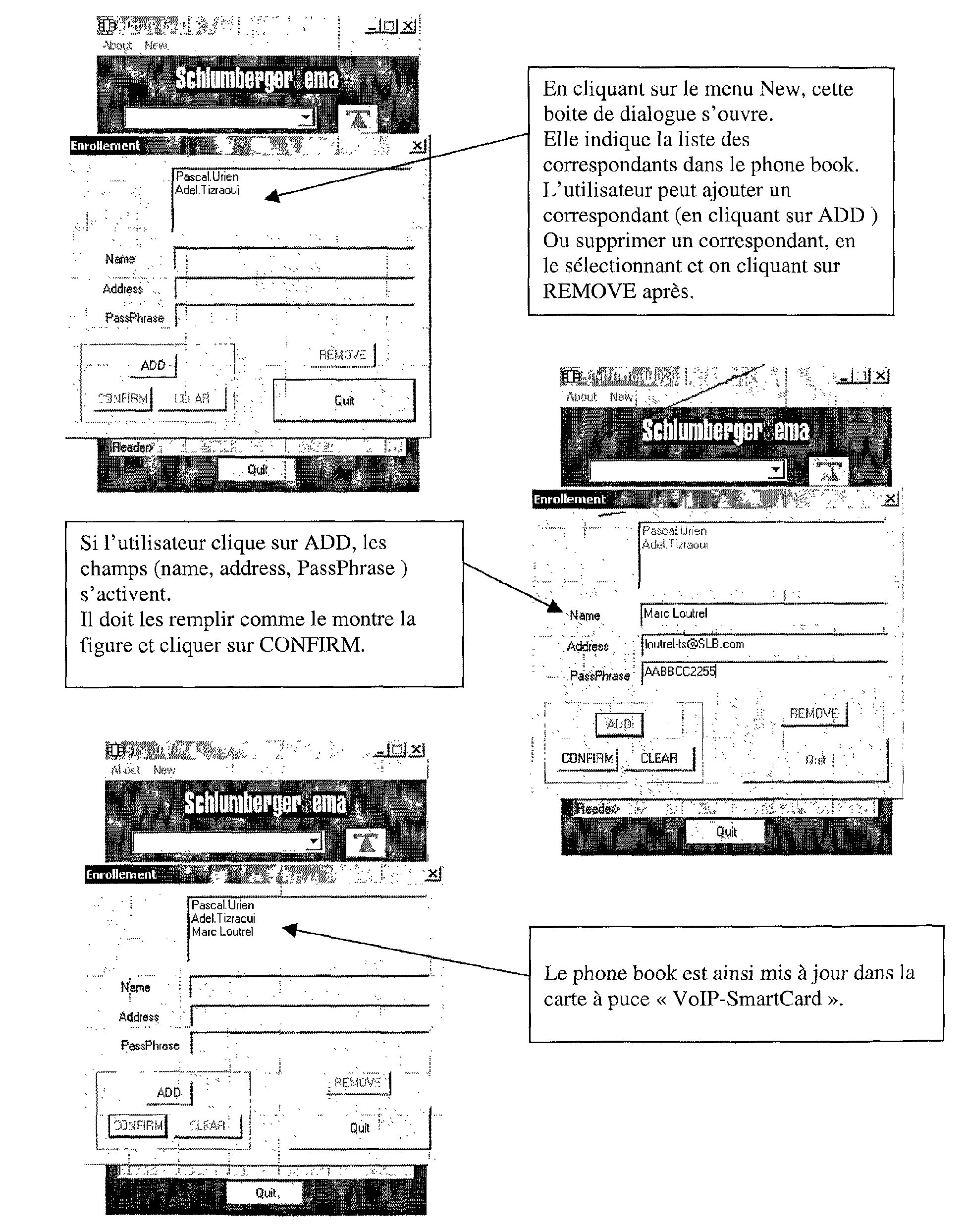

## Revendications

1. Architecture pour établir une session multimédia sur un réseau, comprenant un terminal coopérant avec un système embarqué, chacun d'eux comprenant des moyens de traitement d'information et des moyens de stockage d'information et le terminal comprenant des moyens de communication agencés pour établir une communication selon un protocole de communication défini sur ce réseau, **caractérisée en ce que** le terminal comprend en outre :
- des moyens d'enregistrement et de localisation d'un usager appelé sur le réseau ;
- des moyens d'authentification d'un usager appelant à partir de ce terminal et possédant ce système embarqué ;
et **en ce que** les moyens de stockage du système embarqué stockent :
- une information d'identité de l'usager appelant ;
- une adresse de l'usager appelé ou de son terminal, définissant la localisation de l'un de ceux-ci sur le réseau ; et
- au moins une clé cryptographique,
lesdits moyens d'enregistrement et de localisation étant agencés pour enregistrer et localiser l'usager appelé à partir de son adresse ou de celle de son terminal, fournie par le système embarqué ; et
lesdits moyens d'authentification étant agencés pour authentifier l'usager appelant à partir de ladite clé fournie par le système embarqué.
